# EUROPEAN PATENT APPLICATION

(11) **EP 4 428 104 A1**
(43) Date of publication of application: **11.09.2024**
(21) Application number: 23160671.6
(22) Date of filing: 08.03.2023
(51) Int. Cl.: C02F 1/28, C02F 1/38, B01D 53/50, B01D 53/92, B04B 1/10, B63H 21/38, F02M 26/35, C02F 103/08, C02F 101/32, C02F 101/10, C02F 101/16, C02F 101/20, C02F 1/56, C02F 103/18

(54) **METHOD AND SYSTEM FOR CLEANING POLLUTED MARINE EXHAUST GAS CLEANING LIQUID**

(71) Applicant: Alfa Laval Corporate AB, 221 00 Lund (SE)
(72) Inventor: GRAM BILDE, Kasper, 9530 STØVRING (DK)
(74) Representative: Alfa Laval Attorneys

(57) **Abstract**

The present invention provides a method (100) for cleaning polluted cleaning liquid, wherein the polluted cleaning liquid is a polluted marine exhaust gas cleaning liquid. The method is comprising the steps of a) providing (101) said polluted cleaning liquid; b) adding (102) a solid porous adsorbent to said polluted cleaning liquid; c) allowing (103) said adsorbent to react with pollutants of said polluted cleaning liquid; d) subjecting (104) the polluted cleaning liquid to separation in a centrifugal separator; and e) discharging (105) a clean liquid phase and a pollutant phase from said centrifugal separator. The present invention further provides a system for cleaning polluted cleaning liquid, wherein the polluted cleaning liquid is a marine exhaust gas cleaning liquid.

## Description

### Field of the Invention

The present invention relates to the field of exhaust gas cleaning systems and methods.

### Background of the Invention

The shipping industry of today strives to reduce harmful emissions, such as emissions originating from the combustion of fuel in the engine, in order to minimize the negative environmental impact and fulfil present and upcoming emission regulations.

One part in this is the reduction in nitrogen oxides (NOx) emissions from marine engines. This can be done by implementing Exhaust Gas Recirculation (EGR), where part of the exhaust gas is recirculated to the combustion chamber of the engine. However, the amount of soot and particles in the hot exhaust gas needs to be decreased. It is therefore desirable to especially cool and clean the exhaust gas, which can be done by using a cleaning liquid which, however, produces a polluted cleaning liquid.

Another object is to reduce in sulphuric oxide (SOx) emissions from ships. Sulphuric oxides are created in the combustion of fuels containing sulphuric residues. The amount of sulphuric oxides in exhaust gas can be reduced by exhaust gas cleaning, e.g. by using scrubbers. The process of cleaning exhaust gas with the aid of a scrubber also produces polluted cleaning liquid.

Equipment for cleaning polluted cleaning liquid includes e.g. membrane and filter technology, air flotation devices and centrifugal separators. However, equipment relying on filter technology has the drawback in the need for surveillance, service and replacement of filter components.

Centrifugal separators are generally used for separation of liquids and/or solids from a liquid mixture or a gas mixture and utilizes the principle of a density difference between the fluid- and solid phases to collect separated fractions at different radii from the rotational axis. See for example WO2011/104302 A1 for an example in which a centrifugal separator is used for cleaning polluted cleaning liquid.

However, new regulations for NOx and SOx emissions require even better cleaning processes for the polluted cleaning water. Thus, there is thus a need in the art for improved methods and systems for cleaning polluted marine exhaust gas cleaning liquid.

### Summary of the Invention

A main object of the present invention is to provide a system and method for cleaning polluted cleaning liquid, such as polluted cleaning water used onboard a ship for reducing of NOx or SOx emissions.

As a first aspect of the invention, there is provided a method for cleaning polluted cleaning liquid, wherein the polluted cleaning liquid is a polluted marine exhaust gas cleaning liquid; said method comprising the steps of
a) providing said polluted cleaning liquid;
b) adding a solid porous adsorbent to said polluted cleaning liquid;
c) allowing said adsorbent to react with pollutants of said polluted cleaning liquid; and
d) subjecting the polluted cleaning liquid to separation in a centrifugal separator; and
e) discharging a clean liquid phase and a pollutant phase from said centrifugal separator.

Marine exhaust gas cleaning liquid refers to cleaning liquid that is used onboard a ship for cleaning exhaust gases from an engine. The cleaning may be performed in e.g. an EGR unit or in a SOx scrubber. The cleaning liquid that has been used for cleaning the exhaust gas thus the polluted marine exhaust gas cleaning liquid, or simply "polluted cleaning liquid" in the present disclosure.

The cleaning liquid may be an aqueous cleaning liquid, such as water, e.g. tap water, fresh water or desalinated seawater.

The polluted cleaning liquid provided in step a) is thus a cleaning liquid comprising pollutants, such as solid and/or liquid particles comprising organic or inorganic combustion residues such as sulphuric oxide residues, soot, partly oxidized and unoxidized marine fuel oil and salts from oxidized metals. Polluted cleaning liquid may thus be water polluted with oil and pollutant particles, such as pollutant organic particles.

In embodiments of the first aspect, the polluted cleaning liquid comprises at least 20 mg/l oil, such as at least 50 mg/l oil, such as at least 100 mg/l oil.

As an example, the polluted cleaning liquid may comprise about 20-300 mg/l oil, such as 25-200 mg/l oil.

In embodiments of the first aspect, the polluted cleaning liquid comprises a suspended solids content of about 25 -2000 mg/l, such as between 50-1500 mg/l.

As an example, the suspended solids content in the polluted cleaning liquid may be between 50-150 mg/l.

In embodiments of the first aspect, the polluted cleaning liquid comprises, an oil content of 25-200 mg/l oil and a suspended solids content of about 50-1500 mg/l.

The solid porous adsorbent added in step b) may be in the form of a slurry, powder or granulate. The solid porous adsorbent may have a highly porous structure that attract molecules or ions that adhere to the surface.

The solid porous adsorbent may be capable of adsorbing pollutants in the polluted cleaning liquid, such as capable of adsorbing oil. The pollutants may be adsorbed on the outer surface of the adsorbent and/or within the adsorbent, such as within pores of the adsorbent.

Step c) of allowing the adsorbent to react with the pollutants of the polluted cleaning liquid may be performed at least during a specific time interval, such as during at least 10 min, such as during at least 15 min, such as at least 25 min. As an example, step c) may comprise allowing the adsorbent to react with the pollutants of the polluted cleaning liquid during 5-30 min.

The term "allowing the adsorbents to react" may thus mean allowing the adsorbents to adsorb onto the surface of the adsorbent and/or into pores of the adsorbents.

The centrifugal separator of step d) may be a disc stack centrifugal separator. Thus, step d) may comprise supplying polluted scrubber liquid to an inlet of the centrifugal separator so that the polluted cleaning liquid may be separated into a clean liquid phase and a pollutant phase with aid of a disc stack arranged within the centrifugal separator.

Step e) of discharging a clean liquid phase may comprise continuously discharging a clean liquid phase, and discharging the pollutant phase may be a continuous discharge or an intermittent discharge from the centrifugal separator.

The clean liquid phase may have a reduced amount of pollutants but may still comprise a low amount of pollutants. In analogy, the pollutant phase separated from the polluted cleaning liquid may still comprise a certain amount of cleaning liquid.

The first aspect of the invention is based on the insight that solid porous adsorbents may be effective in adsorbing pollutants in the polluted cleaning water so that they may be more easily separated in a centrifugal separator. As an example, it has been found that oil present in the polluted cleaning liquid may adsorb to adsorbents to such degree that they remain onto or within the adsorbents even when subjected to the very strong centrifugal field in a centrifugal separator.

This is especially important for modern engines fulfilling Tier II and Tier III NOx regulations. Such engines produce only a small amount of soot, making the cleaning liquid difficult to clean. As a high oil concentration can be present in the polluted cleaning liquid, the density of the solid phase is low and is difficult to sediment using a centrifugal separator without the addition of adsorbents according to the present invention. Furthermore, it has been observed for exhaust gas recirculation (EGR) systems, that when the suspended solids concentration is low (TSS<100 mg/l) and the oil concentration is high (C_oil>200 PPM) an oil film can be present on top of the polluted cleaning liquid. This oil film has previously been very difficult to remove when using prior art methods with a centrifugal separator, such as when the centrifugal separator is configured as a clarifier for liquid-solid separation.

Moreover, a high concentration of heavy metals is present in the polluted cleaning liquid originating from a SOx scrubber due to the engine burning heavy fuel oil (HFO) and operating so called closed-loop mode. It has been found that using adsorbents, a high amount of the harmful heavy metals such as nickel, vanadium, zinc may be separated from the polluted cleaning liquid.

In embodiments of the first aspect, step c) is performed during stirring of said polluted cleaning liquid.

Stirring may facilitate adsorption of pollutants to the added adsorbents. Stirring may be performed during addition of the adsorbent or start just after addition of the adsorbent in step c).

As an example, the addition of step b) is to a tank comprising said polluted cleaning water. Thus, the stirring may be performed in the tank to which the adsorbents are added.

However, the stirring does not need to be performed in a tank. As a further example, the addition of step b) is to a piping system through which said polluted cleaning water is transported. Thus, the stirring of the polluted cleaning liquid may be performed by transporting the polluted cleaning liquid in e.g. a pipe. The addition of the adsorbent may thus be during recirculation of the polluted cleaning liquid, e.g. during recirculation through a piping system from a tank and back to the same tank. Thus, the adsorbent may be added to the polluted cleaning liquid while transporting the polluted cleaning liquid, i.e. while the polluted cleaning liquid is in motion (flows).

In embodiments of the first aspect, the method further comprising a step of adding a flocculant and/or a coagulation agent to said polluted cleaning liquid before step d).

The flocculant and/or coagulation agent may be added between steps c) and d) i.e. after addition and reaction of the polluted cleaning liquid with the adsorbents but before supply of the polluted cleaning liquid to the centrifugal separator.

A flocculant and/or coagulation agent facilitate the agglomeration of particles in the polluted liquid and therefore makes it easier to separate the pollutants in the centrifugal separator. As an example, the flocculant and/or coagulation agent may be a polymer, such as a polyelectrolyte. Thus, the flocculant may be a polymer flocculant of anionic, cationic or nonionic type with different characteristics as regarding for example, physical length, coupling and strength. As an example, the flocculant may be a cationic flocculant.

As mentioned above, the centrifugal separator used may be a disc stack centrifugal separator. The disc stack centrifugal separator may have a single liquid outlet for a separated liquid phase and an outlet for a separated sludge phase. Thus, the disc stack centrifugal separator may be of a clarifier type.

Consequently, in embodiments of the first aspect, the separation of step d) produces a single pollutant phase and a single liquid phase, and wherein the single liquid phase is discharged as the clean liquid phase in step e).

Therefore, pollutants in the polluted cleaning liquid may be discharged in the same single pollutant phase. For example, pollutants in the form of oil and particles may be discharged in the same pollutant sludge phase. Further, since the added adsorbents may agglomerate with oil and particles in the polluted cleaning liquid, they may also be removed in the centrifugal separator in the single pollutant phase, i.e. in the sludge phase.

However, also a centrifugal separator having two liquid outlets may be used. For example, a three-phase centrifugal separator may be used. Such separator may be arranged for separating the polluted cleaning liquid into a clean liquid phase, such as a water phase, a pollutant liquid phase such as an oil phase, and a pollutant sludge phase.

In embodiments of the first aspect, the polluted cleaning liquid provided in step a) originates from recirculated cleaning liquid used in an exhaust gas recirculation (EGR) unit for marine applications.

In an EGR system for marine application, after a cooling and cleaning process, part of the exhaust gas is recirculated to the engine. The cleaning and cooling process involves the use of an EGR unit, usually comprising an EGR cooling unit in which the recirculated exhaust gas is sprayed with a cleaning liquid, such as fresh water. The cleaning liquid is recirculated by excess polluted cleaning liquid may need to be bled off from the EGR unit and be cleaned. Bleed off cleaning liquid may comprise surplus liquid, such as water, from the combustion process accumulated in the EGR system.

Thus, step a) may comprise providing bled off polluted cleaning liquid from an EGR unit an EGR drain tank, and the addition of adsorbent in step b) may be to the polluted cleaning liquid in the EGR drain tank.

"Bled off polluted cleaning liquid" refers to polluted cleaning liquid that has been bled off from the EGR system and is thus not later returned to the EGR system, but instead cleaned and handled elsewhere. The centrifugal separator used in step d) may thus be part of a water handling system (WHS) for an EGR system.

Moreover, the clean liquid phase, i.e. the cleaned water, discharged from the centrifugal separator in step e) may either be sent directly overboard, to a holding tank for later disposal, or be recirculated back to the EGR drain tank. Consequently, the clean liquid phase discharged in step e) may meet the international requirements for bleed-off water, e.g. as stated in 2015 Guidelines for Exhaust Gas Cleaning Systems, MEPC 259 (68).

As an example, step e) may further comprise discharging said clean liquid phase overboard.

As a further example, step e) may further comprise discharging said clean liquid to a tank for later disposal.

As a further example, step e) may further comprise recirculating the clean liquid phase to a tank for further treatment in the centrifugal separator.

In embodiments of the first aspect, the polluted cleaning liquid provided in step a) originates from recirculated cleaning liquid used in a SOx scrubber.

During the combustion of fossil fuels in a marine engine, exhaust gas containing sulphur oxides (SOX) is formed. The exhaust gas could be passed through a SOx scrubber and/or a wet electrostatic precipitator to be washed with a cleaning liquid whereby pollutants in the exhaust gas are caught in the liquid. The cleaning liquid is usually circulated via a circulation tank in a circulation loop, and a centrifugal separator in a water handling system (WHS) may be used to clean the polluted cleaning liquid and send it back to such circulation tank. Alternatively, a centrifugal separator in a water handling system (WHS) may be used to clean the polluted cleaning liquid and send it overboard or to a tank for later disposal, i.e. bleeding off cleaning liquid from the circulation loop.

Thus, as an example, step a) may comprise providing polluted cleaning liquid used in a SOx scrubber in a circulation tank, and step e) may further comprise recirculating the clean liquid phase back to the circulation tank.

The circulation tank may be a tank for holding cleaning liquid that is later used in the SOx scrubber.

As a further example, step a) may comprise providing polluted cleaning liquid used in a SOx scrubber in a circulation tank, and step e) may further comprise sending the cleaned liquid overboard or to a tank for later disposal.

In embodiments of the first aspect, the solid porous adsorbent used is selected from the group consisting of activated carbon, zeolites, iron oxide coated sand, silica gel, nano adsorbents, graphene-based adsorbents and natural adsorbents.

As an example, the solid porous adsorbent used may be selected from the group consisting of activated carbon, zeolites and graphene-based adsorbents.

As an example, the solid porous adsorbent may be activated carbon. Activated carbon may have been processed from carbon to have a high surface area.

Further, step b) may comprise adding activated carbon to a concentration of 50-300 mg/l, such as between 100-250 mg/I, in the polluted cleaning liquid.

The activated carbon may have a mean particle size of between 2-200 µm, such as between 5-150 µm.

The activated carbon may be pulverized activated carbon.

The activated carbon may be pulverized activated carbon with a surface area that is at least 300 m²/g, such as at least 500 m²/g.

As an example, the activated carbon may be pulverized activated carbon having a surface area of at least 500 m2/g and a mean particle size of less than 75µm (diameter).

As a second aspect of the invention, there is provided a system for cleaning polluted cleaning liquid, wherein the polluted cleaning liquid is a marine exhaust gas cleaning liquid. The system is comprising
- a centrifugal separator arranged for separating at least one polluted phase and a clean phase from said polluted cleaning liquid,
- a dosing unit comprising solid porous adsorbent and arranged upstream of said centrifugal separator for addition of said solid porous adsorbent to said polluted cleaning liquid,
- transportation means for transporting the polluted cleaning liquid to which said adsorbent has been added to said centrifugal separator.

The terms and definitions used in relation to the second aspect are the same as discussed in relation to the first aspect above.

The system may thus be used for performing the method of the first aspect.

The centrifugal separator may be as discussed in relation to the first aspect above.

The centrifugal separator arranged for separating least one polluted phase and a clean phase from said polluted cleaning liquid. The centrifugal separator may thus be arranged for separating the polluted cleaning liquid into a single liquid phase and a sludge phase, or into two liquid phases and a sludge phase. The centrifugal separator may comprise a stationary frame and a drive member configured to rotate a centrifuge bowl within the frame. The centrifuge bowl may be enclosing the separation space. The separation space may comprise a stack of separation discs arranged centrally around the axis of rotation. Such separation discs form surface enlarging inserts in the separation space. The separation discs may have the form of a truncated cone, i.e. the stack may be a stack of frustoconical separation discs.

The dosing unit may comprise a chemical or membrane dosing pump to dose the adsorbent. The dosing unit may further comprise a mixer arranged for mixing the solid porous adsorbent with e.g. water prior to dosing. However, if the adsorbent is already in a slurry, only a dosing pump may be needed.

As an example, the dosing unit may comprise a reservoir comprising the solid porous adsorbent, a powder mixer and a freshwater supply. The dosing unit may further comprise a mixing unit, such as an agitator mixer for mixing the powdered adsorbent with the freshwater before supply. The dosing unit may further comprise a membrane dosing pump and piping to the dosing location.

As a further example, the dosing unit may comprise a reservoir comprising powdered adsorbent as a slurry, a membrane dosing pump and piping to the dosing location.

The solid porous adsorbent may be as discussed in relation to the first aspect above.

The transportation means may for example comprise a pump, such as a feed pump for transporting the polluted cleaning liquid to the inlet of the centrifugal separator.

In embodiments of the second aspect, the system is further comprising a tank from which said polluted cleaning liquid can be transported to said centrifugal separator. Thus,

The system may comprise piping that connects the tank with the inlet of the centrifugal separator. The transportation means is arranged for transporting the polluted cleaning liquid to which said adsorbent has been added from the tank to said centrifugal separator.

As an example, the dosing unit may be arranged to add said solid porous adsorbent to said tank and the tank may further comprise stirring means for stirring the polluted cleaning liquid in said tank.

The stirrer may thus be arranged to mix the components within the tank, i.e. the polluted cleaning liquid and the added adsorbent. The stirring means may comprise stirring blades that are arranged to be rotated within the tank. The stirring blades may be attached to a shaft that is rotated by means of e.g. a motor. The use of a stirred tank thus facilitates adsorption of the pollutants in the polluted cleaning liquid to the adsorbent and decreases the sedimentation time for the adsorbent in the tank, thereby increasing the adsorption capacity.

As an example, the tank may be a circulation tank via which polluted scrubber water may be circulated to the centrifugal separator and back. Thus, the centrifugal separator and the circulation tank may form a first recirculation system.

In embodiments of the second aspect, the system is further comprising a recirculation system arranged for recirculating the polluted cleaning liquid in the tank before transport to said centrifugal separator, and wherein the dosing unit is arranged to add said solid porous adsorbent to said recirculation system.

Thus, the tank may be part of a circulation system that does not involve the centrifugal separator. In this case, the adsorbents may be added to such recirculation system. The flow of polluted cleaning liquid in such recirculation system may thus facilitate mixing of the adsorbent with the pollutants of the polluted cleaning liquid, thereby facilitating adsorption of the pollutants to the adsorbents.

In embodiments of the second aspect, the system is further comprising a pre-treatment unit upstream of the centrifugal separator, and the transportation means for transporting the polluted cleaning liquid to which said adsorbent has been added to said centrifugal separator via the pre-treatment unit. Such pre-treatment unit may comprise a dosing unit for a flocculant and/or coagulant. The dosing unit for the flocculant and/or coagulant may thus be connected to a supply unit comprising a flocculant and/or adsorbent. The flocculant and/or coagulants may be as discussed in relation to the first aspect above. The flocculants and/or coagulant may aid in agglomerating the pollutants to make them easier to separate in the centrifugal separator.

The pre-treatment unit may thus comprise a flocculator device, such as a static or hydraulic flocculator device in which flocculation of the pollutants occurs without any moving parts.

In embodiments of the second aspect, the system is further comprising an exhaust gas recirculation (EGR) unit arranged for cleaning exhaust gas from an engine and thereby produce polluted cleaning water, and wherein the system is further arranged for transporting said polluted cleaning water from said EGR unit to said centrifugal separator.

As discussed in relation to the first aspect above, such EGR unit may be part of an EGR system for recirculating exhaust gas back to a marine engine. The EGR unit may is used to clean and cool the exhaust gas before it is introduced to the engine. The EGR unit may comprise an EGR cooling unit, in which the exhaust gas is cooled using a cleaning liquid. A polluted cleaning liquid may thus be formed from the EGR cooling unit. The system may further comprise a buffer tank in which polluted cleaning liquid from the EGR unit is collected and recirculated to the EGR unit. Further, the system may comprise an EGR drain tank, into which part of the polluted cooling water is bled off for cleaning and later disposal e.g. overboard. The dosing unit may thus be arranged for addition of the solid porous adsorbent to the polluted cleaning liquid in the EGR drain tank, either directly to the EGR drain tank or to a recirculation system involving the EGR drain tank but not the centrifugal separator, as discussed above.

In embodiments of the second aspect, the system is further comprising a SOx scrubber arranged for cleaning exhaust gas from an engine and thereby produce polluted cleaning water, and wherein the system is further arranged for transporting said polluted cleaning water from said SOx scrubber to said centrifugal separator.

The SOx scrubber could be a so-called closed loop scrubber which uses a circulating scrubber liquid containing freshwater or seawater in combination with an alkaline agent like sodium hydroxide (NaOH) or magnesium hydroxide (Mg(OH)₂) to wash out sulphur oxides and particles from the exhaust gas. In such a scrubber, the amounts of aqueous sulphite, sulphate salts and particles in the circulating cleaning liquid are gradually increasing. The polluted cleaning liquid may continuously be cleaned and sent back to the SOx scrubber.

The system may comprise a circulation tank and the cleaning liquid may be recirculated to the SOx scrubber via the circulation tank. The system may be arranged to transport a portion of the polluted cleaning liquid in the circulation tank to the centrifugal separator and back to the circulation tank. Thus, the transportation means, such as a pump, may be used to transport the polluted cleaning liquid from the circulation tank to the centrifugal separator.

The system may also be arranged for bleeding off a portion of the clean phase from the centrifugal separator overboard or to a tank for later disposal, i.e. not returning all of the clean phase back to the circulation tank.

### Brief description of the Drawings

Figure 1 shows a schematic drawing of an embodiment of a system of the present invention for cleaning polluted cleaning liquid from an EGR unit.
Figure 2 shows a schematic drawing of another embodiment of a system of the present invention for cleaning polluted cleaning liquid from an EGR unit.
Figure 3 shows a schematic drawing of another embodiment of a system of the present invention for cleaning polluted cleaning liquid from a SOx scrubber.
Figure 4 shows a schematic drawing of a centrifugal separator that may be used in the system of the present disclosure.
Figure 5 schematically shows the process steps of the method of the present disclosure.

### Detailed Description

The method and the system according to the present disclosure will be further illustrated by the following description with reference to the accompanying drawings.

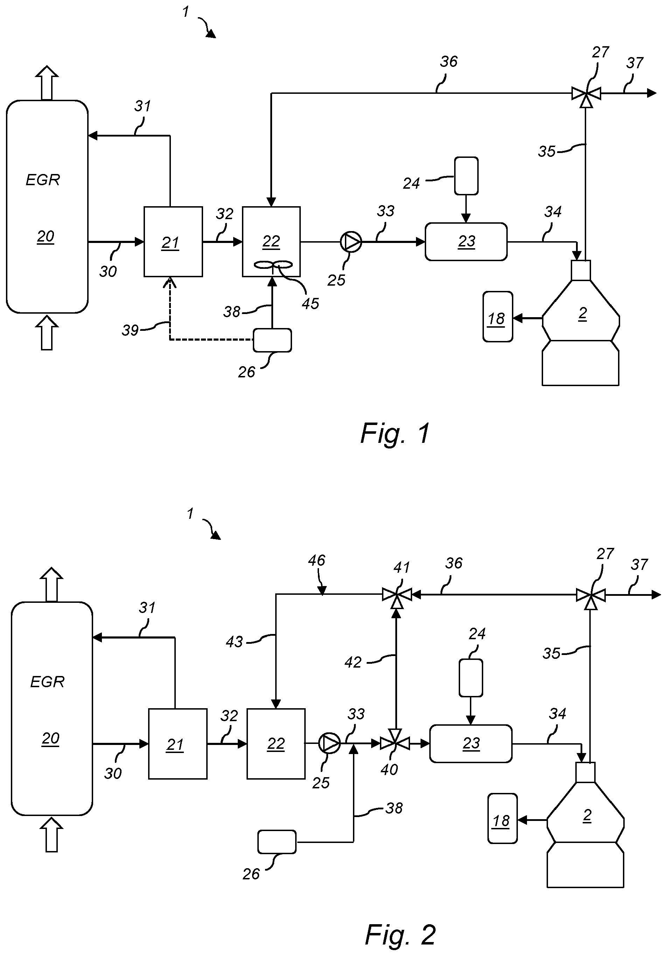

Fig. 1 shows a schematic drawing of an embodiment of a system 1 for cleaning polluted cleaning liquid. In this example, the polluted cleaning liquid is a marine exhaust gas cleaning liquid, such as water, which originates from an exhaust gas recirculation (EGR) unit 20 aboard a ship. The EGR unit 20 may thus be part of a larger EGR system for recirculating exhaust gas back to the engine of the ship. In the EGR unit, cleaning liquid is used to cool and decrease the pollutants of the exhaust gas that is transported through the EGR unit 20 (as indicated by the thick arrows), thus generating polluted cleaning liquid. The polluted cleaning liquid is circulated between the EGR unit 20 and the buffer tank 21 via piping 30 and 31. The buffer tank 21 is connected to EGR drain tank 22, e.g. via an overflow outlet 32, so that polluted cleaning liquid in EGR drain tank 22 is not introduced into the EGR unit 20.

The polluted cleaning liquid in EGR drain tank is transported in piping 33 and 34 to centrifugal separator 2 using a liquid feed pump 25. The centrifugal separator is arranged for separating a polluted phase and a clean phase from the polluted cleaning liquid. The clean phase, thus comprising the cleaned cleaning liquid is continuously discharged via a single liquid outlet to outlet pipe 35, whereas the pollutant phase, comprising pollutant particles and oil, is intermittently discharged to sludge tank 18.

Upstream of the centrifugal separator 2 there is also a pre-treatment unit 23 installed, and the liquid feed pump 25 is arranged for transporting the polluted cleaning liquid to the centrifugal separator 2 via the pre-treatment unit 23. The pre-treatment unit 23 may be a flocculant device and may further comprise a supply unit 24 for dosing an amount of flocculant and/or coagulant to the polluted cleaning liquid that is to be cleaned in the separator 2. The supply unit 24 may thus comprise the actual flocculant and/or coagulant that is to be added. Addition of flocculant and/or coagulant increases the separation capacity of the pollutants in the centrifugal separator 2.

The cleaned cleaning liquid from outlet pipe 35 may either be sent overboard or to a tank for later disposal via pipe 37 or may be returned to the EGR drain tank via pipe 36. This is controlled by valve means 27. Thus, cleaned cleaning liquid may be mixed with polluted cleaning liquid in EGR drain tank for further cleaning in the centrifugal separator. The liquid leaving the system 1 via pipe 37 is however bled off from the system 1.

As also illustrated in Fig. 1, the system 1 comprises a dosing unit 26 comprising solid porous adsorbent. This is arranged upstream of the centrifugal separator 2 and is used for addition of a solid porous adsorbent to the polluted cleaning liquid. In the example shown in Fig. 1, the dosing unit 26 is arranged to add the solid porous adsorbent to the EGR drain tank 22, as indicated by arrow 38. To facilitate mixing and adsorption of e.g. oil in the polluted cleaning liquid to the adsorbents, the EGR drain tank 22 comprises a stirring means 45 for stirring the polluted cleaning liquid in the EGR drain tank 22.

The solid porous adsorbent may, as discussed above, be activated carbon.

Further, as indicated by dotted arrow 39, the solid porous adsorbent could as a complement or alternative be added to the buffer tank 21.

Fig. 2 a schematic drawing of an embodiment of a system 1 for cleaning polluted cleaning liquid. In this example, the polluted cleaning liquid is also a marine exhaust gas cleaning liquid, such as water, which originates from an exhaust gas recirculation (EGR) unit 20 aboard a ship. The system 1 has the same components the function in the same way as discussed in relation to Fig. 1 above, with the exception that the system 1 further comprises a recirculation system 46 that is arranged for recirculating the polluted cleaning liquid in the drain tank 22 before it is transported to the centrifugal separator 2. Thus, downstream of the liquid feed pump 25, there is a valve means 40 arranged for directing the polluted cleaning liquid in EGR drain tank to the return conduit 36 arranged between the centrifugal separator 2 and the EGR drain tank 22. Therefore, by regulating valve 40 and valve 43, a recirculation system 46 may be formed that recirculates the polluted cleaning liquid by using the liquid feed pump 25. When being recirculated, the polluted cleaning liquid is transported via piping 33, 42 and 43. With such a setup, the dosing unit is arranged to add the solid porous adsorbent to the recirculation system 46. Thus, the pollutants are mixed with the adsorbents during recirculation and transport in the recirculation system 46 during a time period before using valve 40 to direct the pollutant cleaning liquid to which adsorbents have been added to the centrifugal separator 2 via the pre-treatment unit 23. As indicated by arrow 38 in Fig. 2, the dosing unit 26 is arranged to add adsorbents to the polluted cleaning liquid at a position that is downstream liquid feed pump 25. However, as an alternative, the dosing unit 26 may be arranged to add adsorbents to the polluted cleaning liquid at a position that is upstream the liquid feed pump 25 in the recirculation system 46, such as at a position between the EGR drain tank and the liquid feed pump 25.

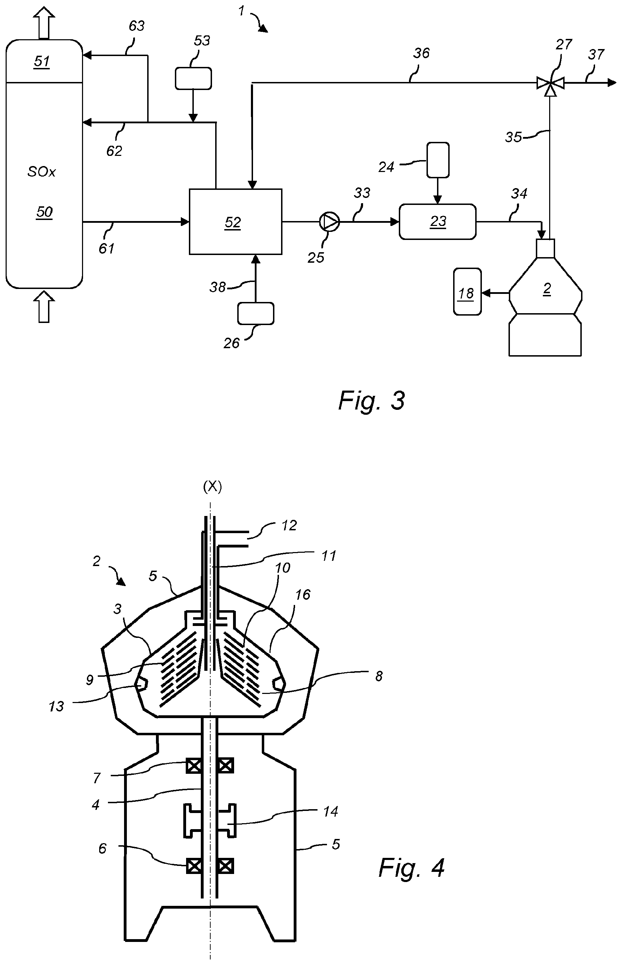

Fig. 3 shows a schematic drawing of an embodiment of a system 1 for cleaning polluted cleaning liquid. In this example, the polluted cleaning liquid is a marine exhaust gas cleaning liquid, such as water, which originates from a SOx scrubber 50 arranged for cleaning exhaust gas from the engine aboard a ship.

Exhaust gas is thus fed to be washed with a cleaning liquid within the scrubber 50, so that pollutants from the exhaust gas may be absorbed and thus generate polluted cleaning liquid. The scrubber 50 further comprises an electrostatic precipitator 51 to further increase the absorption of pollutants into the cleaning liquid. Polluted cleaning liquid from the scrubber 50 is transported circulation tank 52 via piping 61, and cleaning liquid from circulation tank 52 is circulated back to the scrubber via pipe 62 and to the precipitator 51 via pipe 63. Before being introduced to the scrubber and/or precipitator, an alkaline agent like sodium hydroxide (NaOH) or sodium carbonate (Na₂CO₃) is added to the cleaning liquid using dosing unit 53.

The contents in circulation tank 52, which thus comprises polluted cleaning liquid, is cleaned by centrifugal separator 2 and returned to the circulation tank via return line 36 or bled off from the system for overboard disposal or to a tank for later disposal via pie 37.

The polluted cleaning liquid in the circulation tank 52 is transported in piping 33 and 34 to centrifugal separator 2 using a liquid feed pump 25. As in the system discussed in relation to Figs. 1 and 2, the centrifugal separator 2 is arranged for separating a polluted phase and a clean phase from the polluted cleaning liquid. The clean phase, thus comprising the cleaned cleaning liquid is continuously discharged via a single liquid outlet to outlet pipe 35, whereas the pollutant phase, comprising pollutant particles and oil, is intermittently discharged to sludge tank 18.

Upstream of the centrifugal separator 2 there is also a pre-treatment unit 23 installed, and the liquid feed pump 25 is arranged for transporting the polluted cleaning liquid to the centrifugal separator 2 via the pre-treatment unit 23. The pre-treatment unit 23 may be a flocculant device and may further comprise a supply unit 24 for dosing an amount of flocculant and/or coagulant to the polluted cleaning liquid that is to be cleaned in the separator 2. The supply unit 24 may thus comprise the actual flocculant and/or coagulant that is to be added. Addition of flocculant and/or coagulant increases the separation capacity of the pollutants in the centrifugal separator 2.

As mentioned above, the cleaned cleaning liquid from outlet pipe 35 may either be sent overboard or to a tank for later disposal via pipe 37 or may be returned to the circulation tank 52 via return pipe 36. This is controlled by valve means 27. The centrifugal separator 2 may thus be used to continuously clean the circulated cleaning liquid used in the scrubber 50. The liquid leaving the system 1 via pipe 37 is however bled off from the system 1.

As also illustrated in Fig. 1, the system 1 comprises a dosing unit 26 comprising solid porous adsorbent. This is arranged upstream of the centrifugal separator 2 and is used for addition of a solid porous adsorbent to the polluted cleaning liquid. In the example shown in Fig. 1, the dosing unit 26 is arranged to add the solid porous adsorbent to the circulation tank 52, as indicated by arrow 38. Since the contents of the circulation tank is circulated to the scrubber 50 and to the centrifugal separator 2, no further stirring means may be needed in the tank 52.

Fig. 4 illustrates and gives some further details of the centrifugal separator 2 that may be used in the system 1 as shown in Figs. 1-3.

The centrifugal separator 2 comprises a rotating part arranged for rotation about an axis of rotation (X) and comprises centrifuge bowl 3 and spindle 4. The spindle 4 is supported in the stationary frame 5 of the centrifugal separator in a bottom bearing 6 and a top bearing 7.

The centrifuge bowl 3 forms within itself a separation chamber 8 in which centrifugal separation of e.g. polluted cleaning liquid takes place during operation.

The separation chamber 8 is provided with a stack of frusto-conical separation discs 9 in order to achieve effective separation of the liquid. The stack of truncated conical separation discs 9 are examples of surface-enlarging inserts. These discs 9 are fitted centrally and coaxially with the centrifuge bowl 3 and comprise holes which form channels 10 for axial flow of liquid when the separation discs 9 are fitted in the centrifuge bowl 3.

Polluted cleaning liquid to be separated is fed from the top via stationary inlet pipe 11 extending down into the centrifuge bowl 3.

The centrifuge bowl 3 has extending from it a liquid light phase outlet 12 for a clean liquid phase separated from the polluted cleaning liquid. The liquid light phase outlet 12 is extending through the frame 5 at the top of the separator. In this example, the separator 2 has only one liquid outlet 12, but the separator 2 could also comprise further liquid outlets for liquid phases of other densities than the density of the liquid withdrawn via outlet 12. This depends on the liquid material that is to be processed. In such cases, any liquid of higher density may instead be forced out through a further liquid outlet (not shown) that is at a radial distance that is larger than the radial level of outlet 12. As an example, a further liquid outlet may be utilized if oil is separated from the polluted scrubber fluid as a separate liquid phase.

The centrifuge bowl 3 is provided at its outer periphery with a set of radially sludge outlets 13 in the form of intermittently openable outlets for discharge of higher density component such as sludge or other solids in the liquid. Pollutants in the form of particles and oil that adhere to particles may thus be discharged from a radially outer portion of the separation chamber 8 to the space round the centrifuge bowl 3.

The centrifugal separator 1 is further provided with a drive motor 14. This motor 14 may for example be an electric motor that is arranged to transmit driving torque to the spindle 4 and hence to the centrifuge bowl 3. rotor 3. As an alternative, the drive motor 14 may be connected to the spindle 4 by transmission means such as drive belts or the like.

During operation of the separator in Fig. 3, the centrifuge bowl 3 is caused to rotate by torque transmitted from the drive motor 14 to the spindle 4. Via the stationary inlet pipe 11, polluted cleaning liquid to be separated is brought into the separation space 8 e.g. when the rotor is already running at its operational speed. Polluted cleaning liquid may thus be continuously introduced into the rotor 3.

The pollutant phase comprising particles and oil agglomerated to the particles move radially outwards between the separation discs, whereas a clean phase, i.e. cleaned cleaning liquid, moves radially inwards between the separation discs and is forced through outlet 12. The pollutant phase comprising particles and oil accumulate at the periphery of the separation chamber 8 and is emptied intermittently from the separation space by the sludge outlets 13 being opened, whereupon the pollutant phase is discharged from the separation space by means of centrifugal force.

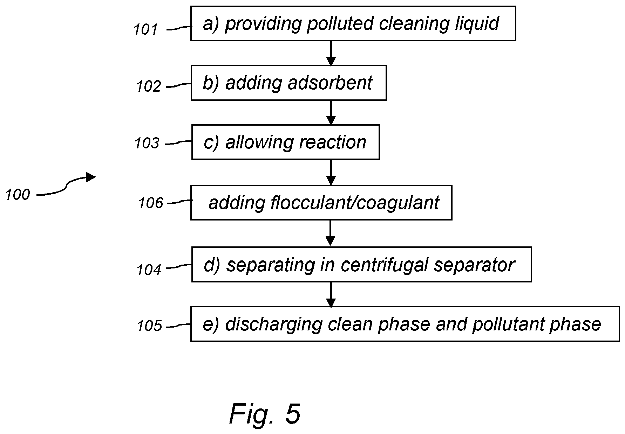

Fig. 5 illustrates the different methods steps of the method 100 for cleaning polluted cleaning liquid, wherein the polluted cleaning liquid is a polluted marine exhaust gas cleaning liquid. The method 100 comprising the steps of a) providing 101 said polluted cleaning liquid; b) adding 102 a solid porous adsorbent to said polluted cleaning liquid and c) allowing 103 the adsorbent to react with pollutants of said polluted cleaning liquid. The method further comprises a step of adding 106 a flocculant and/or a coagulation agent to said polluted cleaning liquid before step d) subjecting 104 the polluted cleaning liquid to separation in a centrifugal separator takes place. The method 100 further comprises the step e) of discharging 105 a clean liquid phase and a pollutant phase from the centrifugal separator.

The invention is not limited to the embodiment disclosed but may be varied and modified within the scope of the claims set out below. The invention is not limited to the type of separator as shown in the Figures. The term "centrifugal separator" also comprises centrifugal separators with a substantially horizontally oriented axis of rotation and separator having more than one liquid outlet.

### Experimental example

The oil adsorption efficiency of powdered activated carbon was tested. Lubrication oil was added to demineralized laboratory water to reach a concentration of 250 mg/l. The lubrication oil had a density of 905 kg/m3. Two different types of powdered activated carbon were used:
Sample 1 had a surface area of 900 m²/g and a mean diameter of 50 µm. The size of the particles was up to 35 µm when studied in microscopy.
Sample 2 had a surface area of 550 m²/g and a mean diameter of 25 µm. The size of the particles was up to 180µm when studied in microscopy.

A total of 16 tests were performed using different dosing rates with the two different samples. The oil in water content was measured in the range of C6-C40 using a standard M-0153 GC-FID.

All samples showed a satisfactory oil efficiency removal capacity in the range of 65-90 %. Thus, the laboratory test clearly showed that the activated carbon samples could remove oil from the water samples. This thus demonstrates that oil in the polluted cleaning water may adsorb to the activated carbon and be more easily separated in the centrifugal separator.

## Claims

1. A method (100) for cleaning polluted cleaning liquid, wherein the polluted cleaning liquid is a polluted marine exhaust gas cleaning liquid; said method comprising the steps of
a) providing (101) said polluted cleaning liquid;
b) adding (102) a solid porous adsorbent to said polluted cleaning liquid;
c) allowing (103) said adsorbent to react with pollutants of said polluted cleaning liquid;
d) subjecting (104) the polluted cleaning liquid to separation in a centrifugal separator; and
e) discharging (105) a clean liquid phase and a pollutant phase from said centrifugal separator.

2. A method (100) according to claim 1, wherein step c) is performed during stirring of said polluted cleaning liquid.

3. A method (100) according to claim 2, wherein the addition of step b) is to a tank comprising said polluted cleaning water.

4. A method (100) according to claim 2, wherein the addition of step b) is to a piping system (46) through which said polluted cleaning water is transported.

5. A method (100) according to any previous claim, wherein the method further comprising a step of adding (106) a flocculant and/or a coagulation agent to said polluted cleaning liquid before step d).

6. A method (100) according to any previous claim, wherein the separation of step d) produces a single pollutant phase and a single liquid phase, and wherein the single liquid phase is discharged as the clean liquid phase in step e).

7. A method (100) according to any previous claim, wherein the polluted cleaning liquid provided in step a) originates from recirculated cleaning liquid used in an exhaust gas recirculation (EGR) unit for marine applications.

8. A method (100) according to any one of claims 1-6, wherein the polluted cleaning liquid provided in step a) originates from recirculated cleaning liquid used in a SOx scrubber.

9. A method (100) according to any previous claim, wherein the solid porous adsorbent used is selected from the group consisting of activated carbon, zeolites, iron oxide coated sand, silica gel, nano adsorbents, graphene-based adsorbents and natural adsorbents.

10. A system (1) for cleaning polluted cleaning liquid, wherein the polluted cleaning liquid is a marine exhaust gas cleaning liquid, said system (1) comprising
- a centrifugal separator (2) arranged for separating at least one polluted phase and a clean phase from said polluted cleaning liquid,
- a dosing unit (26) comprising solid porous adsorbent and arranged upstream of said centrifugal separator for addition of said solid porous adsorbent to said polluted cleaning liquid,
- transportation means (25) for transporting the polluted cleaning liquid to which said adsorbent has been added to said centrifugal separator (2).

11. A system (1) according to claim 10, further comprising a tank (22, 52) from which said polluted cleaning liquid can be transported to said centrifugal separator (2).

12. A system (1) according to claim 11, wherein the dosing unit (26) is arranged to add said solid porous adsorbent to said tank (22, 52), and wherein said tank comprises stirring means (45) for stirring the polluted cleaning liquid in said tank (22, 52).

13. A system (1) according to claim 11, further comprising a recirculation system (46) arranged for recirculating the polluted cleaning liquid in said tank (22, 52) before transport to said centrifugal separator, and wherein the dosing unit is arranged to add said solid porous adsorbent to said recirculation system (46).

14. A system (1) according to any one of claims 10-13, further comprising an exhaust gas recirculation (EGR) unit (20) arranged for cleaning exhaust gas from an engine and thereby produce polluted cleaning water, and wherein the system (1) is further arranged for transporting said polluted cleaning water from said EGR unit (20) to said centrifugal separator (2).

15. A system (1) according to any one of claims 10-13, further comprising a SOx scrubber (50) arranged for cleaning exhaust gas from an engine and thereby produce polluted cleaning water, and wherein the system (1) is further arranged for transporting said polluted cleaning water from said SOx scrubber (50) to said centrifugal separator (2).
